**Europäisches Patentamt**

**European Patent Office**

**Office européen des brevets**

(19)

(11) Publication number: **0 223 388**
**A1**

## (12) EUROPEAN PATENT APPLICATION

(21) Application number: **86307732.7**

(22) Date of filing: **07.10.86**

(51) Int. Cl.4: **G06F 15/30** , G09F 9/00 , G06F 3/147

(30) Priority: **17.10.85 GB 8525636**

(43) Date of publication of application:
**27.05.87 Bulletin 87/22**

(84) Designated Contracting States:
**AT BE CH DE ES FR GB IT LI LU NL**

(71) Applicant: **SIGN AND METAL INDUSTRIES PLC
Green Street
Entfield Middlesex EN3 7SE(GB)**
0

(72) Inventor: **Walsh, Richard John
The Thatches Friars Road
Braughing Herts SG11 2NN(GB)**

(74) Representative: **Ablett, Graham Keith et al
F.J. Cleveland & Company 40-43 Chancery
Lane
London WC2A 1JQ(GB)**

(54) **Electronic display apparatus.**

(57) This invention relates to an electronic display apparatus suitable for displaying rates of exchange. The electronic display apparatus has a front display face (I) with an upper band (2) incorporating a title "Rates of Exchange" and the currency of the country in which the apparatus is located. A central band of the front face incorporates a plurality of parallel angled locations (3) each having at the base thereof a light source (4). Each angled location includes printed information thereon indicating both a country and the currency thereof. In a lower band (5) of the front face, two electronic displays (6,7) are provided, such as light emitting diodes. Respective displays are entitled "We Buy" and "We Sell".

A user operable control unit operates one of the light sources (4) at a time thereby indicating one of the angled locations carrying a country and currency name. At the same time the appropriate buying and selling rates for the currency of that country are retrieved from a memory and supplied to the display units. The operation of the light sources underneath the angled locations can be cycled so that buying and selling rates for each country are periodically scanned.

Fig.3

# ELECTRONIC DISPLAY APPARATUS

This invention relates to an electronic display apparatus and in particular to an electronic display apparatus suitable for displaying rates of currency exchange.

In banks, bureau de change, hotels or the like, the proprietor likes to display the various currency rates available. Most currency exchanges offer exchange rates for a large number of countries, typically at least four. The display apparatus needs to incorporate at least the purchase price and the sale price of the currency on offer. In many cases a further rate is quoted for travellers cheques. As a result of currency fluctuations on the international money markets, the displayed currency rates are liable to frequent alteration. Accordingly, any display apparatus for rates of exchange needs to have the capacity for simple updating as often as required to reflect the fluctuations in the exchange rate.

Figure I illustrates a known display apparatus for rates of exchange. The board comprises three columns for indicating buying price, selling price and travellers cheques, which are split into rows, each row having a country name indicated on the left-hand side. Numbers indicate the currency value in each row and typically comprise peg-in characters which are pegged into a perforated background, or alternatively clip-in characters can be employed which are attached to a ribbed background. This apparatus which has been in existence for over twenty years, allows simple manual alteration of the characters whenever currency fluctuations occur.

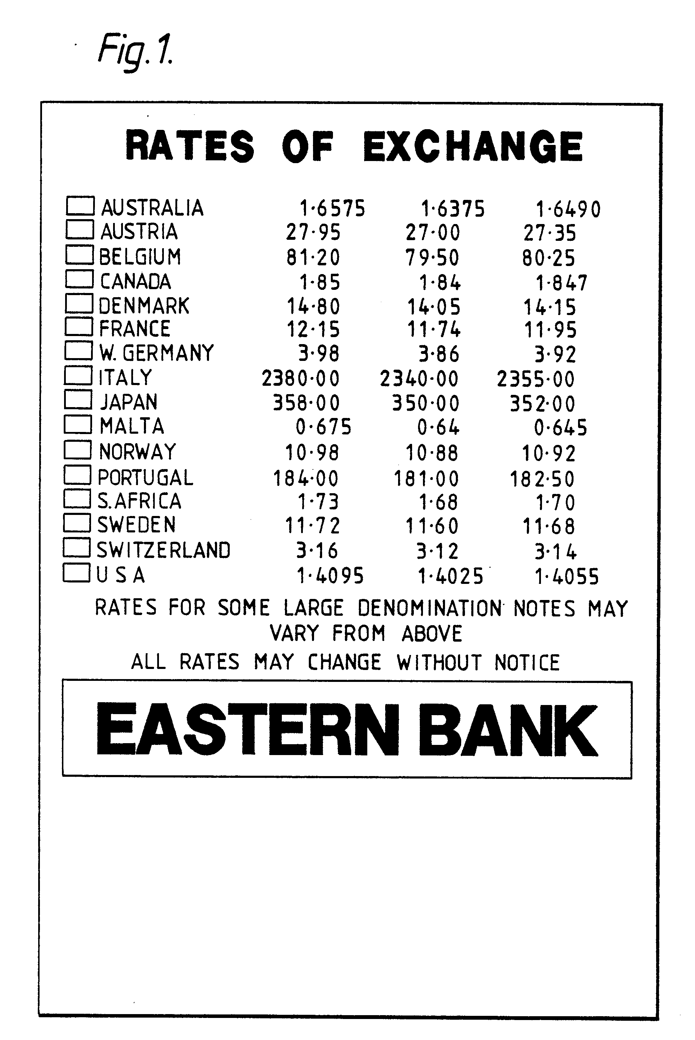

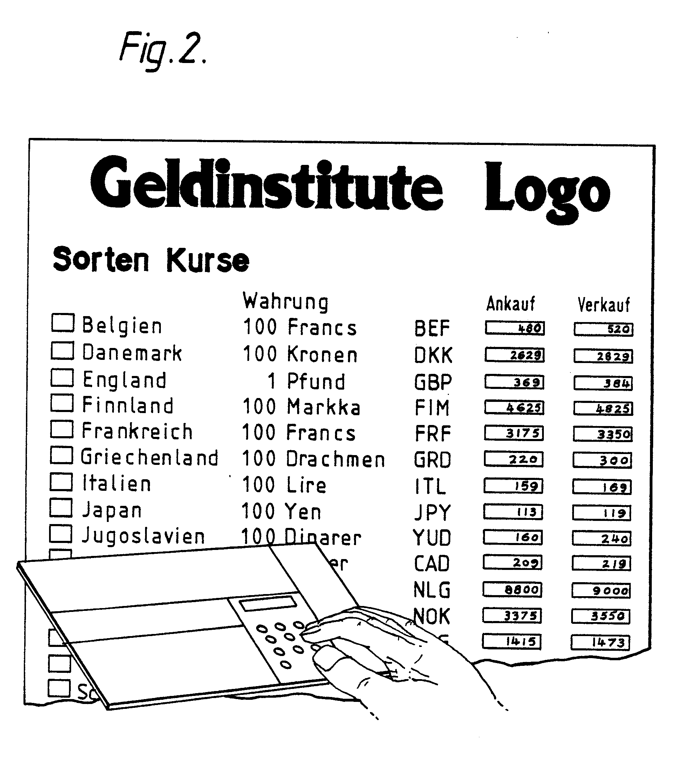

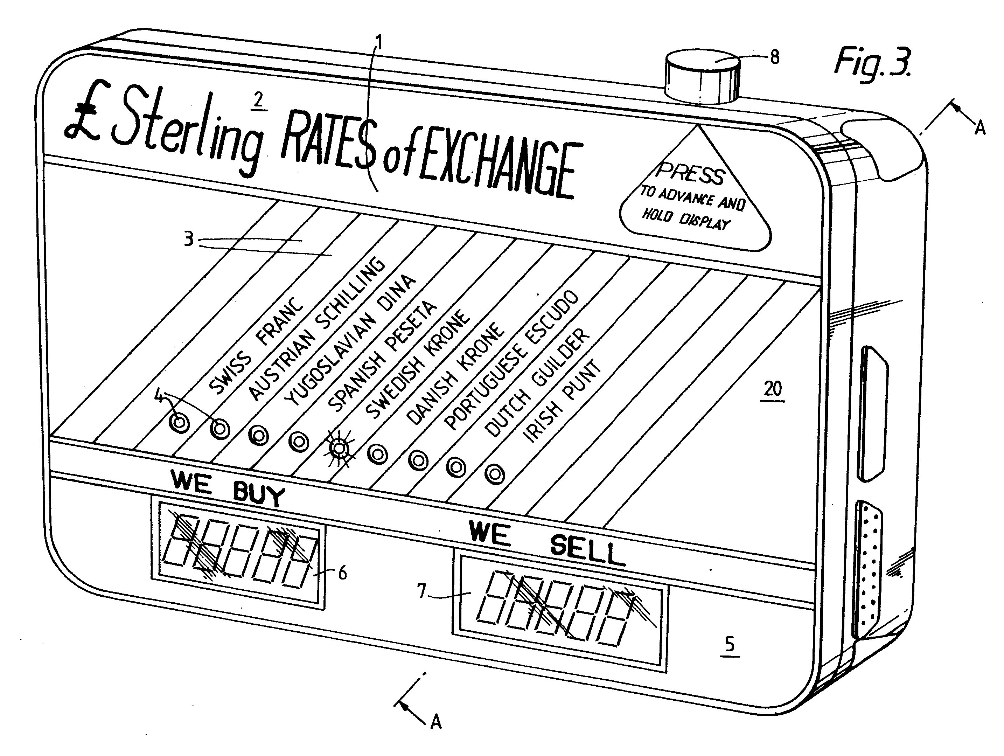

With the recent advances in the electronic industry, proprietors of rate of exchange display apparatus have sought an electronic display apparatus which can be connected via dedicated land lines or by a radio link to a controlling central computer. In this way, simple and immediate updating of the currency rates could be effected. Naturally, it is possible to produce electronic display of the respective currency values by using either liquid crystal displays or light emitting diode displays. Figure 2 shows an electronic rate of exchange display apparatus. As can be seen, an individual electronic display unit is employed for the respective purchase price and sale price for each country. Consequently, the display apparatus shown in figure 2 is able to display all the currency values so as to achieve an electronic equivalent to the display apparatus shown in figure I.

The apparatus shown in figure 2 has a number of problems which are restricting their commercial exploitation. Firstly, the cost of such electronic display apparatus are very high because of the number of display units, consequently they are used only in particular locations justifying such a financial outlay. Small bureau de change, hotels and local bank branches do not consider the advantages of an electronic design to justify the required expenditure. Secondly, the number of currencies displayed is predetermined rendering them inflexible so that the production costs increase because a universal display cannot be produced which will encompass the different number of currencies offered from bank to bank, country to country and hotel to hotel etc. Thirdly, the legibility of the electronic digits shown in figure 2 is less than the clip-in or peg-in characters shown in figure I. For example, backlit liquid crystals offer suitable visibility at close range, however there are severe limitations on the angle of view available so that a person viewing the display shown in figure 2 must stand some distance therefrom in order to ensure that all currencies are viewed. Clearly this reduces the effectiveness of the apparatus and hence its saleability. Vacuum fluorescent digits offer an alternative, however the cost of the individual display units is once again prohibitive.

It is an object of the present ivention to provide a display apparatus which is considerably cheaper to produce than hitherto known electronic display apparatus. It is also an object of the present invention to provide an electronic display apparatus having effective legibility and adaptability to the particular use for rate of exchange displays.

According to the invention there is provided an electronic display apparatus having N first units for displaying stored primary information, M second units for displaying stored secondary information where M is less than N, and control means whereby actuation of one or more first units to display at a time is accompanied by actuation of the M secondary units to display stored information relevant to the primary information currently displayed. In this way, actuation of a first unit or units is accompanied by display of information on the secondary units which is relevant to the information displayed by the first unit. Thus, for rate of exchange displays, the first units can display the countries and on actuation of one of the country displays, the second units can display the currency values corresponding to that country. Consequently only one set of second units is required for displaying currency values. As a result the price of the display apparatus is significantly reduced relative to hitherto known display apparatus, and a person viewing the display only needs to concentrate on the second unit display until the relevant exchange information is displayed.

Preferably, the control means actuates periodic scanning of all the primary units. Consequently for a rate of exchange board successive countries are actuated on the first units and the corresponding exchange information is displayed on the second units. Advantageously the scanning rate can be adjusted to allow individual proprietors to have their own preferred scanning rate. Conveniently, the apparatus includes manually operable means actuable to cause actuation of a selected one or ones of said primary units. Consequently, a person responsible for exchanging currency can operate the display apparatus to display the currency in which a customer is currently interested and can of course interrupt thereby the scanning.

In a preferred embodiment of the invention, the apparatus includes store means for storing the secondary information and the store means is capable of supplying said relevant information when the first unit is actuated. Consequently a small portable apparatus can be produced. The apparatus can include means for receiving up-dating data for overwriting the information stored in said store means. With this facility it is easy to alter the stored exchange rate values. Alternatively, the apparatus includes interface means connectable to a remote store means storing the secondary information, said relevant information being supplied to the second unit in response to actuation by the control means. Consequently, it is possible for the display apparatus to be remote from any central system and have all available currency information stored. Alternatively, the display apparatus can be connected to a centralised system storing the most up-to-date rates of exchange. Preferably, the store means comprises a programmable read only memory and is conveniently a non-volatile memory. Consequently, the store means can be regularly up-dated by a user as and when necessary.

Preferably, the first units each comprise an element having printed information thereon in combination with a light source actuable by the control means to display thereby the printed information. Such an arrangement is particularly convenient for currency displays since the written information is constant. Thus, the printed information can comprise country names and currency names and only the actuation of the light source indicates which of the first units is currently being displayed. Furthermore, the elements can include simple stick-on strips to overlay the currently printed information. As an alternative, the printed information can be provided on clip-on or peg-in elements further increasing the flexibility of the display apparatus. Conveniently, at least one of said first units includes a blank element arranged to obscure said light source. In this way, the number of countries for display can be easily altered.

Preferably, the control means is operable to skip display of selected one or ones of said first units and includes means to vary the scan rate.

The present invention will now be described with reference to the accompanying drawings, in which:-

Figure I illustrates a currently available manual rate of exchange apparatus.

Figure 2 illustrates a currently available electronic display apparatus.

Figure 3 illustrates a display apparatus embodying the present invention.

Figure 4 illustrates a section along the line A -A shown in figure 3.

Figure 5 illustrates an electonic circuit suitable for use in the display apparatus of the present invention.

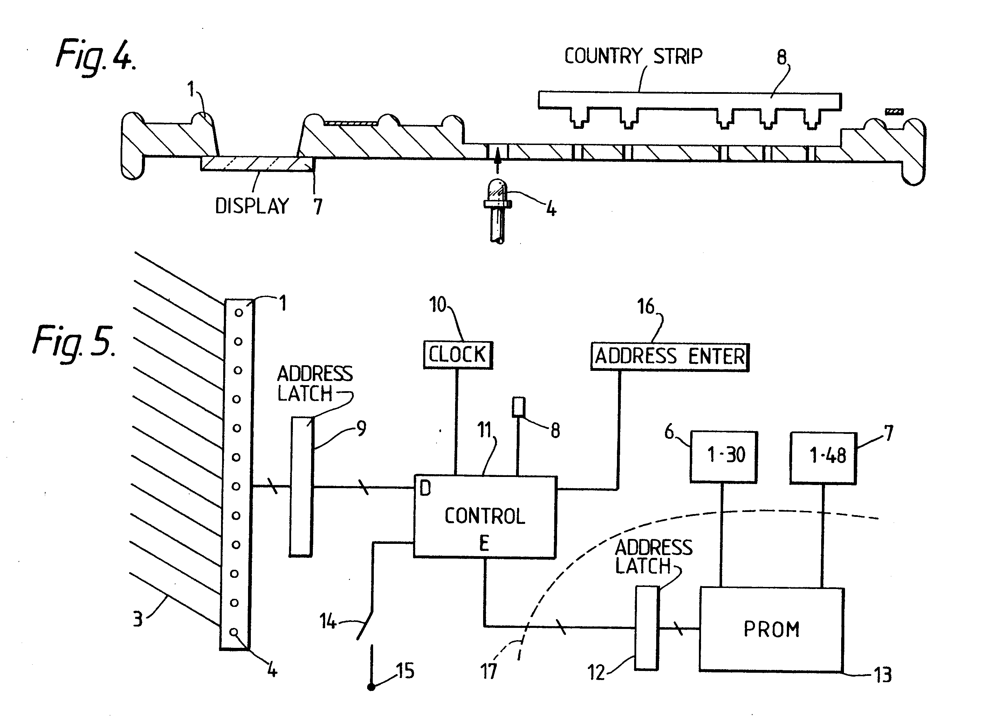

Referring to figure 3, a display apparatus has a front face display I. An upper portion 2 thereof incorporates a title "rates of exchange" and the currency of the country in which the apparatus is located. A central band 20 of the front face of the apparatus incorporates a plurality of parallel angled locations 3 each having at the base thereof a light source 4. Each location 3 has printed information thereon indicating both a country and the currency thereof. In a lower band 5 of the front face, two electronic displays 6 and 7 are provided, these may be of any suitable form for example light emitting diodes, liquid crystal displays or vacuum fluorescent digits. Above each display 6 and 7 the words "we buy" and "we sell" are printed. A button 8 is provided on the upper surface of the apparatus and the purpose of this button will be apparent hereinafter.

Figure 4 illustrates a section along the line A -A of figure 3. It can be seen that the central band 3 incorporates a perforated background allowing the plugging in of a strip 8 which carries the printed identification of a country. While employing such a peg-in structure, it is simple to select the location of the countries on the band 3. Conveniently, blank strips can be provided for insertion into the perforated background of the face, which strips can be elongated to obscure the light source 4. In this way, the number of currencies displayed can be reduced. Alternatively, simple stick-on labels can be applied to the locations 3.

Figure 5 illustrates one embodiment of an electronic circuit suitable for the electronic display apparatus embodying the present invention. A control unit II has an output B connected via an address latch 9 to the light sources 4. The particular address appearing at the output D is arranged to address at least one of the light sources 4 at the same time. The control unit II also has an output E connected via an address latch I2 to a programmable read only memory I3. The address appear-

ing at output E addresses information stored in the PROM 13, which information is then displayed on the display units 6 and 7. The control unit 11 is connected via a switch 14 to a power source 15. On closing of the switch 14, the control 11 begins to count clock pulses from a clock 10. When a predetermined number of counts is achieved, the address appearing at latch 9 is increased to cause the next light source 4 on the face to be illuminated to thereby display the printed information. The corresponding address appearing at latch 12 is also increased so that the information addressed in PROM 13, and hence displayed on units 6 and 7, is the currency information corresponding to the currently illuminated light source 4.

In summary, the control unit 11 causes each of the light sources 4 to be illuminated and obtaining the relevant currency information from PROM 13 which is then displayed, on display units 6 and 7. Thus, figure 5 causes periodic scanning of each of the countries printed on elements 3 so that a person viewing the display apparatus knows exactly where the display is in its cycle of displaying currencies.

The button 8 is connected to the control unit 11 to allow a user of the apparatus to increase the address appearing on latch 9, and of course the corresponding address appearing on latch 12. In this way, a user of the apparatus can advance the display cycle to display the currency in which a current customer is interested. The button 8 can also incorporate a hold feature to maintain the address on latch 9 until released, or alternatively the control unit can incorporate the means to maintain the address appearing at latch 9 for a predetermined time.

In a more sophisticated version of the apparatus, an address enter 16 can be connected to the control unit 11 to allow a user of the apparatus to immediately cause the address on latch 9 to be the address of the country in which the user is interested. Such a control unit may also be employed to allow a user of the apparatus to programme the PROM 13. It may be preferable to have the PROM 13 located remote from the display apparatus shown in figure 5. For example, the dotted line 17 could comprise a telephone interface allowing the display apparatus to communicate with a remote mainframe computer which centrally stores and updates current rates of exchange. A simple security code may also protect the display from abuse.

Preferably, the PROM 13 is a non-volatile unit and the source 15 can include a battery back-up system. It will be appreciated that both the address latches 9 and 12 may be connected to further display apparatus incorporating the displays 1, 6 and 7 so that the control unit 11 can drive a number of slave units.

It will be appreciated that the apparatus of the present invention is not restricted solely to currency displays, for example the apparatus would be particularly suitable to indicating and up-dating stocks and share prices.

Finally, the embodiment described is an example only and in practise the invention may be applied to many different configurations, the detailed embodiments being straightforward for those skilled in the art to implement. For example, each element 3 could be transparent with the light source behind.

## Claims

1. An electronic display apparatus having N first units for displaying stored primary information, M second units for displaying stored secondary information where M is less than N, and control means whereby actuation of one or more first units to display at a time is accompanied by actuation of the M secondary units to display stored information relevant to the primary information currently displayed.

2. Apparatus as claimed in claim 1 wherein the control means actuates periodic scanning through the first units.

3. Apparatus as claimed in claim 2 including means for varying the rate of scanning of said first units.

4. Apparatus as claimed in any preceding claim including a manually operable means to cause actuation of a selected one or ones of said first units.

5. Apparatus as claimed in any preceding claim including store means for storing the secondary information, said store means being capable of supplying said relevant information when the first unit is actuated.

6. Apparatus as claimed in claim 5 further including means for receiving up-dating data for overwriting the information stored in said store means.

7. Apparatus as claimed in any one of claims 1 to 4 including interface means connectable to a remote store means storing said secondary information, said relevant information being supplied to the second unit in response to act ation by the control means.

8. Apparatus as claimed in any preceding claim wherein said first units comprise an element having printed information thereon in combination with a light source actuable by said control means to display thereby said printed information.

9. Apparatus as claimed in claim 8 wherein at least one of said first units includes a blank element arranged to obscure said light source.

10. Apparatus as claimed in any preceding claim wherein N is at least four and M is less than or equal to three.

## Fig.1.

# RATES OF EXCHANGE

| | | | |
|---|---|---|---|
| ☐ AUSTRALIA | 1·6575 | 1·6375 | 1·6490 |
| ☐ AUSTRIA | 27·95 | 27·00 | 27·35 |
| ☐ BELGIUM | 81·20 | 79·50 | 80·25 |
| ☐ CANADA | 1·85 | 1·84 | 1·847 |
| ☐ DENMARK | 14·80 | 14·05 | 14·15 |
| ☐ FRANCE | 12·15 | 11·74 | 11·95 |
| ☐ W. GERMANY | 3·98 | 3·86 | 3·92 |
| ☐ ITALY | 2380·00 | 2340·00 | 2355·00 |
| ☐ JAPAN | 358·00 | 350·00 | 352·00 |
| ☐ MALTA | 0·675 | 0·64 | 0·645 |
| ☐ NORWAY | 10·98 | 10·88 | 10·92 |
| ☐ PORTUGAL | 184·00 | 181·00 | 182·50 |
| ☐ S.AFRICA | 1·73 | 1·68 | 1·70 |
| ☐ SWEDEN | 11·72 | 11·60 | 11·68 |
| ☐ SWITZERLAND | 3·16 | 3·12 | 3·14 |
| ☐ USA | 1·4095 | 1·4025 | 1·4055 |

RATES FOR SOME LARGE DENOMINATION NOTES MAY
VARY FROM ABOVE

ALL RATES MAY CHANGE WITHOUT NOTICE

# EASTERN BANK

*Fig.2.*

# Geldinstitute Logo

## Sorten Kurse

| | Wahrung | | Ankauf | Verkauf |
|---|---|---|---|---|
| ☐ Belgien | 100 Francs | BEF | 480 | 520 |
| ☐ Danemark | 100 Kronen | DKK | 2629 | 2629 |
| ☐ England | 1 Pfund | GBP | 369 | 384 |
| ☐ Finnland | 100 Markka | FIM | 4625 | 4825 |
| ☐ Frankreich | 100 Francs | FRF | 3175 | 3350 |
| ☐ Griechenland | 100 Drachmen | GRD | 220 | 300 |
| ☐ Italien | 100 Lire | ITL | 159 | 169 |
| ☐ Japan | 100 Yen | JPY | 113 | 119 |
| ☐ Jugoslavien | 100 Dinarer | YUD | 160 | 240 |
| ☐ | | CAD | 209 | 219 |
| | | NLG | 8800 | 9000 |
| | | NOK | 3375 | 3550 |
| | | | 1415 | 1473 |

Fig.3.

£ Sterling RATES of EXCHANGE

PRESS TO ADVANCE AND HOLD DISPLAY

SWISS FRANC
AUSTRIAN SCHILLING
YUGOSLAVIAN DINA
SPANISH PESETA
SWEDISH KRONE
DANISH KRONE
PORTUGUESE ESCUDO
DUTCH GUILDER
IRISH PUNT

WE BUY

WE SELL

0 223 388

Fig.4.

COUNTRY STRIP 8

1

DISPLAY 7 4

Fig.5.

1

ADDRESS LATCH 9

10 CLOCK

16 ADDRESS ENTER

11 8

6 1·30

7 1·48

D CONTROL E

ADDRESS LATCH

3

14

15

17

12

PROM 13

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 092 523 (TAVA et al.) <br><br> * column 1, line 61 - column 2, line 63; column 3, lines 49-58; column 4, lines 16-44; column 5, line 28 - column 6, line 12; column 11, line 60 - column 12, line 10; figures 1, 2 * | 1,4-6, 10 | G 06 F 15/30 <br> G 09 F 9/00 <br> G 06 F 3/147 |
| A | WO-A-8 404 189 (CAMPS et al.) <br><br> * abstract; page 2, line 31 - page 4, line 6; page 5, line 12 - page 6, line 31; figure 1 * | 1,4,5, 7 | |
| A | DE-U-8 217 670 (BOSCH) <br><br> * page 3, lines 13-23; page 7, lines 7-16; figure 1 * | 1,4,8, 10 | |
| X | DE-U-8 408 007 (LANDIS & GYR) <br><br> * claims 1-3; page 3, line 7 - page 3a, line 8; page 4, lines 1-25, 32 - page 6, lines 9, 35 - page 7, line 12; figures 1-4, 6 * | 1,4-6, 8-10 | TECHNICAL FIELDS SEARCHED (Int. Cl.4) <br><br> G 06 F 3/00 <br> G 06 F 15/00 <br> G 09 G 3/00 <br> G 09 F 9/00 <br> G 07 D 1/00 |
| A | DE-A-3 410 065 (MARCHNER) <br> * abstract; claims 1, 3 * | 1,4-6 | |

-/-

The present search report has been drawn up for all claims

| Place of search | Date of completion of the search | Examiner |
|---|---|---|
| BERLIN | 12-01-1987 | BEITNER M.J.J.B. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | GB-A-2 120 820 (ORBITAL DATA SYSTEMS) * page 1, lines 54-84; page 3, lines 33-88; figure 1 * | 1,4-7, 10 | |

-----

TECHNICAL FIELDS
SEARCHED (Int. Cl.4)

The present search report has been drawn up for all claims

| Place of search | Date of completion of the search | Examiner |
|---|---|---|
| BERLIN | 12-01-1987 | BEITNER M.J.J.B. |